# EUROPÄISCHE PATENTSCHRIFT

(11) **EP 0 865 551 B1**
(45) Veröffentlichungstag und Bekanntmachung des Hinweises auf die Patenterteilung: **26.05.1999**
(21) Anmeldenummer: 95942094.4
(22) Anmeldetag: 09.12.1995
(51) Int. Cl.: E04B 2/88, E04F 13/14, E06B 3/54, F16C 11/06

(54) **HALTERUNG FUR DIE BIEGEMOMENTFREIE LAGERUNG VON GLASTAFELN**
MOUNTING FOR STORING GLASS PANELS IN A MANNER FREE FROM BENDING MOMENTS
DISPOSITIF DE FIXATION POUR LE STOCKAGE SANS MOMENTS DE FLEXION DE PANS DE VERRE

(43) Veröffentlichungstag der Anmeldung: 23.09.1998
(73) Patentinhaber: DANZ, Robert, D-71101 Schönaich (DE)
(72) Erfinder: DANZ, Robert, D-71101 Schönaich (DE)
(74) Vertreter: Böhmer, Hans Erich, Dipl.-Ing.
(86) Internationale Anmeldenummer: EP9504861
(87) Internationale Veröffentlichungsnummer: WO9721885

(56) Entgegenhaltungen:
- EP-A- 0 201 212
- EP-A- 0 664 184
- DD-A- 136 273
- DE-A- 3 927 653
- DE-A- 4 342 097
- DE-A-19 515 904
- FR-A- 2 691 490
- US-A- 4 678 523

## Beschreibung

Die Erfindung betrifft eine Halterung für die biegemomentfreie Lagerung von Glasplatten oder Glastafeln, bestehend aus einem oberen Auflageteller, einem unteren Auflageteller und einem in letzterem angeordneten Kugelgelenklager, in dem ein einen Kugelkopf tragender Montagebolzen in eine entsprechend große Bohrung des unteren Auflagetellers eingesetzt ist, wobei ein von oben auf den Kugelkopf in die Bohrung des unteren Auflagetellers eingesetzter Einspannbolzen vorgesehen ist, der an seinem unteren Ende eine hohlkugelkalottenförmige Ausnehmung als obere Gegenlagerschale für den Kugelkopf aufweist und zusammen mit der ebenfalls hohlkugel-kalottenförmigen Ausgestaltung des unteren Endes der Bohrung des unteren Auflagetellers das Kugelgelenklager bildet.

Zum Stand der Technik ist aus der DE 195 15 904 A1 eine Halterung für die biegemomentfreie Lagerung von Glasplatten oder Glastafeln bekannt, welche sich dadurch auszeichnet, daß der in den unteren Auflagetelter in ein Gewinde eingeschraubte Haltebolzen an seinem unteren Ende eine hohlkugel-kalotten-förmige Ausnehmung als Gegenlager für den in einem Kugelkopflager beweglich angeordneten Kugelkopf eines Montagebolzens aufweist.

Ferner ist zum Stand der Technik auf die DE 39 27 653 A1 und die DE 43 42 097 A1 des Anmelders hinzuweisen, für die die vorliegende Anmeldung eine weitere Verbesserung darstellt. Bei diesen vorbekannten Anordnungen gab es immer noch Probleme bei der zuverlässigen Montage und beim Einjustieren des Kugelgelenks. Außerdem war die Bauhöhe immer noch beträchtlich, was bei der Exzentrität des Mittelpunktes des Kugelkpfes in Bezug auf die Mittenebenen der Glasplatten oder Glastafeln relativ hohe örtliche Momente ergab, was zu entsprechend hohen Beanspruchungen der Kanten der Bohrungen in den Glasplatten oder Glastafeln führte.

Die der Erfindung zugrundeliegende Aufgabe besteht darin, die mit der Montage verbundenen Justierprobleme zu beseitigen, die Bauhöhe der gesamten Anordnung zu verringern, die Anzahl der auf Lager zu haltenden Bauteile dadurch zu verringern und damit die Herstellungs- und Montagekosten sowie die Kosten der Lagerhaltung nachhaltig zu senken.

Dies wird mit einer Halterung der eingangs genannten Art gemäß den Merkmalen des Anspruchs 1 erreicht.

Weitere Merkmale von Ausführungsbeispielen der Erfindung sind den weiteren Ansprüchen im einzelnen zu entnehmen.

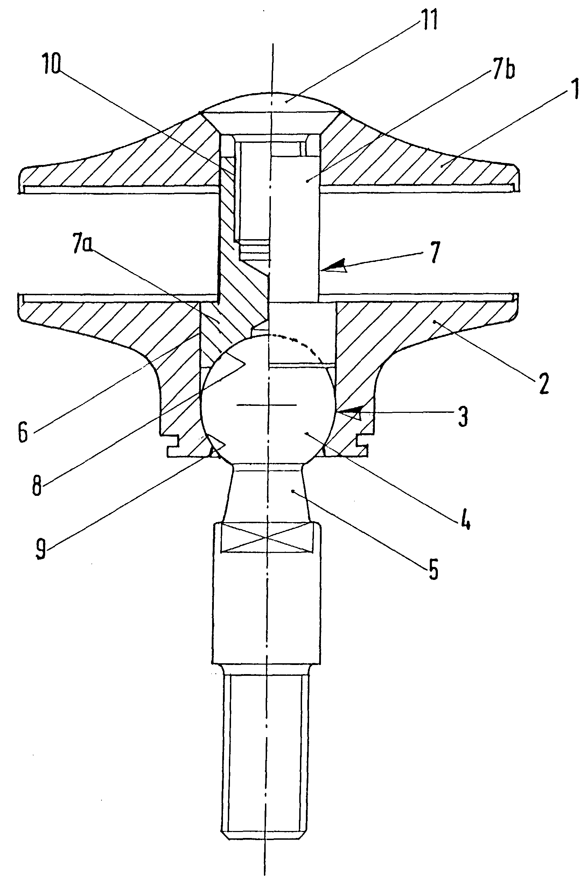

Die Erfindung wird nunmehr anhand eines Ausführungsbeispieles in Verbindung mit der beigefügten Zeichnung im einzelnen beschrieben.

Die erfindungsgemäße Halterung besteht im wesentlichen aus einem oberen Auflageteller 1, einem unteren Auflageteller 2 und einem darin vorgesehenen Kugelgelenklager 3, in dem der Kugelkopf 4 eines Montagebolzens 5 in allen Richtungen begrenzt verschwenkbar gelagert ist. Der Montagebolzen 5 mit seinem Kugelkopf 4 wird dabei in der Vorfertigung durch eine Bohrung 6 in den unteren Auflageteller eingefügt.

Nach Einfugen des Montagebolzens wird ein Einspannbolzen 7 in die Bohrung 6 eingesetzt. Der Einspannbolzen 7 besteht dabei aus zwei Abschnitten, einem ersten, genau in die Bohrung 6 passenden Abschnitt 7a und einem zweiten Abschnitt 7b mit verringertem Durchmesser.

Der untere Abschnitt 7a weist an seiner Unterseite eine hohlkugel-kalottenförmige Ausmehmung 8 auf, die genau an die Kontur des Kugelkopfes 4 angepaßt ist. Diese Ausnehmung 8 bildet zusammen mit einer entsprechenden Ausnehmung 9 in dem unteren Auflageteller 2 das Lager für den Kugelkopf.

Die Abmessungen des Einspannbolzens, insbesondere des Abschnittes a sind so gewählt, daß bei planem Einsetzen des Einspannbolzens in den unteren Auflageteller ein ausreichender Zwischenraum für eine Beweglichkeit des Kugelkopfes sichergestellt ist.

Vor dem Festlegen des Einspannbolzens in dem unteren Auflageteller wird ein Flüssigkeitsfilm mit definierter Dicke eingebracht. Anschließend wird der Einspannbolzen 7 mit seinem unteren Abschnitt 7a mit dem unteren Auflageteller fest verbunden, vorzugsweise verschweißt.

Der obere Abschnitt 7b des Einspannbolzens weist an seinem oberen Ende eine Bohrung 10 auf, in die eine den oberen Auflageteller durchsetzende Einspannschraube 11 einschraubbar ist.

Die zwischen den Auflagetellern einspannbaren Glasplatten oder Glastafeln sind der Einfachheit halber nicht gezeigt.

Durch diese Neukonstruktion fällt zunächst einmal die bisher in den unteren Auflageteller in eine Bohrung eingeschraubte SicherungshUlse weg, die zudem eine Bohrung aufwies, in die der Einspannbolzen eingeschraubt wurde. Dadurch kann das Kugelgelenklager wesentlich näher an die einzuspannenden Glasplatten oder Glastafeln herangeruckt werden. In einem ausgeführten Beispiel beträgt die Verringerung des Abstandes zwischen dem Kugelmittelpunkt und der Mittenebene der Glastafeln oder Glasplatten 8,5 mm. Um diese Strecke wird also das auf die Kanten in der Bohrung der Glasplatten oder Glastafeln wirkende Moment reduziert.

Ein weiterer Vorteil liegt darin, daß der untere Auflageteller komplett mit Kugelgelenk, Montagebolzen und Einspannbolzen vorgefertigt werden kann. Die bisher erforderlichen zusätzlichen Teile mit Gewindebohrungen fallen weg, was eine wesentliche Verringerung der Bearbeitung ermöglicht.

Außerdem sind beim Zusammenbau keine Fehler mehr möglich, da bei einmaliger bündiger Festlegung des Einspannbolzens im unteren Auflageteller die freie Beweglichkeit des Kugelkopfes 4 im Kugelgelenklager 3 ein für alle mal sichergestellt ist.

Die gesamte Halterung für die biegemomentfreie Lagerung von Glasplatten besteht daher nur noch aus drei Teilen, wodurch auch die Lagerhaltung beträchtlich vereinfacht wird.

Die bisher übliche Verschraubung zwischen einem unteren Auflageteller und einer Sicherungshülse und / oder einem Einspannbolzen ist ebenfalls nachteilig, da dort an Gewinden immer noch Feuchtigkeit eindringen kann.

Die unlösbare, rundum hergestellte Schweißverbindung zwischen dem unteren Auflageteller 2 und dem Einspannbolzen 7 verhindert jedes Eindringen von Feuchtigkeit von oben am Gewinde vorbei in das Kugellager.

Von ganz besonderer Bedeutung ist es, wenn der Montagebolzen mit dem Kugelkopf einerseits und der Auflageteller einschließlich des Einspannbolzens andererseits aus unterschiedlichen Werkstoffen bestehen. Der Montagebolzen mit dem Kugelkopf besteht dabei z.B. aus einem Duplex-Stahl, d.h. einem Stahl, der sowohl ferritische als auch austenitische Eigenschaften aufweist. Solche Stähle besitzen eine höhere Festigkeit.

Durch die Verwendung unterschiedlicher Stahlsorten an den Reibungsflächen zwischen dem Kugelkopf und dem Kugelgelenklager wird ein "kaltes" Verschweißen oder Festfressen vermieden, d.h. das elektrochemische Verhalten im Kugelgelenklager wird gegenüber der Verwendung von gleichen oder gleichartigen Materialien erheblich verbessert, was auch die Lebensdauer und Standfestigkeit der Halterung erhöht. Bei der elektrolytisch-chemischen Wechselwirkung zwischen gleichartigen Stählen an Lagerreibungsflächen mit enger Toleranz besteht somit die Gefahr der Kontaktkorrosion. Dies ist besonders wichtig bei Armaturen, wie den Halterungen für Glasplatten oder Glastafeln, die bei Glasdächern und Glasfassaden Anwendung finden und dabei ständig wechselnden Außentemperaturen und Witterungseinflüssen ausgesetzt sind.

Bei allen bisher bekannt gewordenen Halterungen dieser Art war dies nicht berücksichtigt worden.

Außerdem hat die Verwendung eines härteren Materials für den Montagebolzen und den Kugelkopf noch den Vorteil, daß gerade diejenigen Teile, die erhebliche Kräfte und Momente aufnehmen müssen, aus einem härteren Material bestehen, was zur weiteren Erhöhung der Festigkeit der gesamten Anordnung führt.

Selbstverständlich gehören dann zum Einspannen der Glasplatten die entsprechenden Dichtungsringe, die ebenfalls zweckmäßigerweise vorzusehende Dichtungsmasse zwischen den Kanten der Glastafeln oder Glasplatten und dem Einspannbolzen, wobei zweckmäßigerweise der Einspannbolzen selbst noch durch eine HUlse geschützt ist, wie sie auch in der DE 43 42 097 A1 offenbart ist.

Abschließend sei noch bemerkt, daß die erfindungsgemäße Halterung nicht auf ihre Anwendung in Verbindung mit Glastafeln oder Glasplatten beschränkt ist. Sie eignet sich im Prinzip für alle spröden Materialien, die in Form von Tafeln oder Platten verwendet werden können.

## Patentansprüche

1. Halterung für die biegemomentfreie Lagerung von Glasplatten oder Glastafeln, bestehend aus einem oberen Auflageteller (1), einem unteren Auflageteller (2) und einem in letzterem angeordneten Kugelgelenklager (3), in dem ein einen Kugelkopf (4) tragender Montagebolzen (5) in eine entsprechend große Bohrung (6) des unteren Auflagetellers (2) eingesetzt ist, wobei ein von oben auf den Kugelkopf (4) in die Bohrung (6) des unteren Auflagetellers (2) eingesetzter Einspannbolzen (7) mit zwei Abschnitten (7a, 7b) mit unterschiedlichen Durchmessern vorgesehen ist, der an seinem unteren Ende eine hohl kugelkalottenförmige Ausnehmung (8) als obere Gegenlagerschale für den Kugelkopf (4) aufweist und zusammen mit der ebenfalls hohlkugel-kalottenförmigen Ausgestaltung (7) des unteren Endes der Bohrung des unteren Auflagetellers (2) das Kugelgelenklager (3) bildet, dadurch gekennzeichnet, daß der aus zwei Abschnitten (7a, 7b) mit unterschiedlichen Durchmessern bestehende Einspannbolzen (7) mit seinem Abschnitt (7a) mit größerem Durchmesser in eine glatte Bohrung (6) des unteren Auflagetellers (2) passend eingesetzt ist und mit diesem fest verbunden, vorzugsweise verschweißt ist., und daß der Montagebolzen (5) mit dem Kugelkopf (4) einerseits und der untere Auflageteller (2) mit fest damit verbundenen Einspannbolzen (7) andererseits aus unterschiedlichen Werkstoffen bestehen.

2. Halterung nach Anspruch 1, dadurch gekennzeichnet, daß der den Kugelkopf tragende Montagebolzen (5) und der Kugelkopf (4) aus einem Duplex-Stahl bestehen, der sowohl ferritische als auch austenitische Eigenschaften aufweist.

3. Halterung nach Anspruch 1, dadurch gekennzeichnet, daß zwischen dem Kugelkopf (4) und dem Kugelgelenklager (3) ein dünner Flüssigkeitsfilm vorgesehen ist.

4. Halterung nach Anspruch 1, dadurch gekennzeichnet, daß der Durchmesser des oberen Abschnittes (7b) des Einspannbolzens (7) oberhalb der Oberfläche des unteren Auflagetellers (2) verringert ist, so daß bei exakter Bündigkeit der Oberfläche des unteren Abschnittes (7b) des Einspannbolzens (7) mit der Oberfläche des unteren Auflagetellers (2) ein einwandfreier Sitz des Kugelkopfes (4) in seinem Kugelgelenklager mit der erforderlichen Beweglichkeit sichergestellt ist.

## Claims

1. Retaining element for bending moment-free support of glass plates or glass sheets, consisting of an upper support plate (1), a lower support plate (2) and of a ball joint bearing (3) located in the latter, in which an assembly bolt (5) provided with a ball head (4) is inserted in a correspondingly sized hole (6) in the lower support plate (2), whereby a clamping bolt (7) inserted from above into the hole (6) in the lower support plate (2) onto the ball head (4) is provided with two sections (7a, 7b) with different diameters, said clamping bolt having at its bottom end a hollow-sphere dome-shaped recess (8) as the upper thrust bearing shell for the ball head (4) and forming the ball joint bearing (3) together with the also hollow sphere dome-shaped form (7) of the bottom end of the hole in the lower support plate (2), characterized in that the clamping bolt (7) consisting of two sections (7a, 7b) with different diameters is inserted as a fit with its section (7a) with the larger diameter in a smooth hole (6) in the lower support plate (2) and is permanently connected, preferably welded, with the latter, and in that the assembly bolt (5) with the ball head (4) on the one hand and the lower support plate (2) with permanently connected clamping bolt (7) on the other hand consist of different materials.

2. Retaining element in accordance with claim 1, characterized in that the assembly bolt (5) supporting the ball head and the ball head (4) are made of a compound steel that possesses both ferritic and austenitic properties.

3. Retaining element in accordance with claim 1, characterized in that a thin liquid film is provided between the ball head (4) and the ball joint bearing (3).

4. Retaining element in accordance with claim 1, characterized in that the diameter of the upper section (7b) of the clamping bolt (7) is reduced above the surface of the lower support plate (2) so that perfect seating of the ball head (4) in its ball joint bearing is guaranteed with the required mobility when the surface of the lower section (7b) of the clamping bolt (7) is exactly flush with the surface of the lower support plate (2).

## Revendications

1. Système de fixation sans contrainte de flexion pour plaques ou panneaux de verre, comprenant un plateau d'appui supérieur (1), un plateau d'appui inférieur (2) et un logement sphérique (3) aménagé dans ce dernier, lequel logement reçoit un axe de montage (5) doté d'une tête sphérique (4) passant par un alésage (6) de taille correspondante aménagé au niveau du plateau d'appui inférieur (2), avec un axe de serrage (7) fixé par le haut sur la tête sphérique (4) au niveau de l'alésage (6) du plateau d'appui inférieur (2) et comportant 2 sections (7a, 7b) de diamètre différent, lequel axe de serrage (7) présente à son extrémité inférieure un évidement (8) concave faisant office d'une part de coussinet supérieur pour la tête sphérique (4) et d'autre part de logement sphérique (3) en lien avec l'évidement également concave (9) de l'extrémité inférieure de l'alésage du plateau d'appui inférieur (2), caractérisé en ce que l'axe de serrage (7), constitué de deux sections (7a, 7b) de diamètre différent, est ajusté par l'intermédiaire de la section (7a) de plus grand diamètre dans un alésage lisse (6) du plateau d'appui inférieur (2) et fixé à ce dernier, de préférence par soudage, et en ce que l'axe de montage (5) avec la tête sphérique (4), d'une part, et le plateau d'appui inférieur (2) avec l'axe de serrage (7) fixé à demeure avec celui-ci, d'autre part, sont constitués de matériaux différents.

2. Système de fixation selon la revendication 1, caractérisé en ce que l'axe de montage (5) portant la tête sphérique et la tête sphérique (5) elle-même sont constitués d'acier de type duplex, présentant aussi bien des propriétés ferritiques qu'austénitiques.

3. Système de fixation selon la revendication 1, caractérisé en ce qu'un fin film liquide est prévu entre la tête sphérique (4) et le logement sphérique (3).

4. Système de fixation selon la revendication 1, caractérisé en ce que le diamètre de la section supérieure (7b) de l'axe de serrage (7) est diminué au dessus de l'extrémité du plateau d'appui inférieur (2), de manière à garantir une portée irréprochable de la tête sphérique (4) dans le logement sphérique (3) ainsi qu'une mobilité suffisante lorsque l'extrémité de la section inférieure (7b) de l'axe de serrage (7) affleure précisément au niveau de l'extrémité du plateau d'appui inférieur (2).
